(19) Europäisches Patentamt
European Patent Office
Office européen des brevets

(11) **EP 1 847 557 A1**

(12) **EUROPEAN PATENT APPLICATION**

(43) Date of publication:
**24.10.2007 Bulletin 2007/43**

(51) Int Cl.:
***C08F 297/04*** (2006.01) ***C08L 53/02*** (2006.01)

(21) Application number: **06112872.4**

(22) Date of filing: **21.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **KRATON Polymers Research B.V.**
**1030 BH Amsterdam (NL)**

(72) Inventors:
• **Muyldermans, Xavier**
**1348 OTTIGNIES, Louvain-La-Neuve (BE)**
• **Coignoul, Emmanuelle**
**B-1348, Ottignies-Louvain-La-Neuve (BE)**
• **Mayenez, Catherine**
**B-1348, Ottignies-Louvain-La-Neuve (BE)**

(74) Representative: **Kortekaas, Marcel C.J.A. et al**
**Exter Polak & Charlouis B.V.**
**Postbus 3241**
**2280 GE Rijswijk (NL)**

(54) **High molecular weight coupled block copolymer compositions**

(57) High molecular weight coupled block copolymer composition comprising (a) a linear diblock copolymer (I) represented by the general formula (A-B), having a peak apparent molecular weight of from 150,000 to 300,000,
(b) a linear di-armed block copolymer (II), represented by the general formula $(A-B)_2X$,
(c) a tri-armed block copolymer (III), represented by the formula $(A-B)_3X$,
(d) a more than tri-armed block copolymer (IV), represented by the formula $(A-B)_{n>3}X$,
(e) side polymeric structures (SPS) having a peak apparent molecular weight below the linear diblock copolymer (I),

wherein A represents a block of predominantly poly (monovinyl aromatic hydrocarbon) and wherein the poly (monovinyl aromatic hydrocarbon) content is in the range of from 20 to 35 wt%; wherein B represents a block of predominantly poly(conjugated diene); wherein X is the residue of a trifunctional and /or tetrafunctional coupling agent; wherein the block copolymer composition has a weigh average molecular weight $M_w$ in the range of from 450,000 to 800,000, and wherein the relative amounts of block copolymers corresponds to: I is from 5 to 15 wt%; II and III together are from 70 to 90 wt%, wherein III is above 10 wt%; IV is below 10 wt% and SPS is less than 10 wt% respectively, relative to the weight of the total block copolymer composition, in which the respective components add up to 100 %.

EP 1 847 557 A1

Printed by Jouve, 75001 PARIS (FR)

**Description**

Technical Field

The present invention relates to high molecular weight coupled block copolymer compositions. More in particular it relates to block copolymer compositions, comprising block copolymers having at least one poly(monovinyl aromatic hydrocarbon) block and at least one optionally hydrogenated poly(conjugated diene) block. It also relates to a process for preparing said compositions and their use in the preparation of shaped articles and oil gels.

Background Art

High molecular weight block copolymers were known from e.g. the published application JP-2000-103934 (Mitsubishi Chemicals Corp.). Said document actually disclosed thermoplastic elastomer compositions comprising three components (i), (ii) and (iii), in which (i) is a hydrogenated product of a block copolymer having a weight average molecular weight (hereinafter referred to as "Mw") of 200,000 to 450,000 g/mole and the content of a polymer having an Mw of 400,000 g/mole or more in the block copolymer, being 5 % by weight or more, the content of a polymer having an Mw of 200,000 or less in the block copolymer, being 20 % by weight or less, while the block copolymer is represented by the general formulae (1) or (2):

(1) A-(B-A)n or
(2) (A-B)n

wherein A is a polymer block comprising a monovinyl aromatic hydrocarbon, B is a polymer block comprising a conjugated diene unit and n is an integer of 1 to 5; (ii) is a softener for rubber, and (iii) is an olefinic polymer, wherein the weight ratio of (i)/(ii) is from 20/80 to 80/20 and the amount of (iii) is from 1 to 300 parts by weight, based on a total of 100 parts by weight (i) and (ii).

Preferably the content of block copolymer with an Mw of 400,000 or more is 10 % by weight or more, and the content of the block copolymer with an Mw of 200,000 or less is 15 % by weight. However, no block copolymer components were actually disclosed, that showed a maximum Mw of higher than 450,000. The hydrogenation degree of the B blocks in the block copolymers was 80 % or more of the initial ethylenic unsaturation.

It is therefore clear that polymer compositions with a relatively high Mw are rather attractive in terms of their high temperature performance and their property to absorb high amounts of oil. On the other hand it is also clear from this reference that polymer compositions having an Mw greater than 450,000 are too difficult to process. Moreover, a significant problem exists in that polymer compositions having an Mw greater than 450,000 are very difficult to produce due to the high viscosity of the block copolymer when in solution. A further significant problem is that such compositions lack product consistence due to increased die-out during polymerization.

It is the object of the present invention to provide a block copolymer composition outperforming that of the reference mentioned above, granting attractive temperature and oil absorption properties in combination with other product properties when used in compounds and oil gels and the like, that does not suffer the processability disadvantages nor the production disadvantages mentioned above.

Another object of the present invention is formed by a specific manufacturing process for the preparation of said block copolymer compositions.

Still another object of the present invention is formed by end products, having improved physical properties and being produced from said block copolymers.

Disclosure of Invention

As result of extensive research and experimentation said block copolymers aimed at have now surprisingly been found.

Accordingly the present invention relates to block copolymer compositions comprising:

(a) a linear diblock copolymer (I) represented by the general formula (A-B), having a peak apparent molecular weight of from 150,000 to 300,000,
(b) a linear di-armed block copolymer (II), represented by the general formula $(A-B)_2X$,
(c) a tri-armed block copolymer (III), represented by the formula $(A-B)_3X$,
(d) a more than tri-armed block copolymer (IV), represented by the formula $(A-B)_{n>3}X$,
(e) side polymeric structures (SPS) having a peak apparent molecular weight below the linear diblock copolymer (I),

wherein A represents a block of predominantly poly(monovinyl aromatic hydrocarbon) and wherein the poly(monovinyl aromatic hydrocarbon) content is in the range of from 20 to 35 wt%; wherein B represents a block of predominantly poly (conjugated diene); wherein X is the residue of a trifunctional and /or tetrafunctional coupling agent; wherein the block copolymer composition has a weigh average molecular weight Mw in the range of from 450,000 to 800,000, and wherein the relative amounts of block copolymers corresponds to: I is from 5 to 15 wt%; II and III together are from 70 to 90 wt%, wherein III is above 10 wt%; IV is below 10 wt% and SPS is less than 10 wt% respectively, relative to the weight of the total block copolymer composition, in which the respective components add up to 100 %.

It will be appreciated that the present invention also relates to a process for the manufacture of the hereinbefore defined block copolymer compositions and to final products derived from said block copolymer compositions.

Mode(s) for Carrying Out the Invention

Throughout the present specification all molecular weights have been expressed in g/mole, unless stated otherwise. The molecular weights are expressed as apparent molecular weight, and are determined by means of Liquid High Performance Size Exclusion chromatography (LHSEC), according to ASTM D-5926-97. The expression "apparent" is an indication that the molecular weights are determined using a polystyrene standard. The expressions $M_n$, $M_w$ and $M_z$ as used herein are average apparent molecular weights (in g/mol) that are calculated using the following standard equations:

$$M_n = \sum(w_i) / \sum(w_i/M_i)$$

$$M_w = \sum(w_i * M_i) / \sum(w_i)$$

$$M_z = \sum(w_i * M_i * M_i) / \sum(w_i * M_i).$$

With the terms "predominantly", as used in "predominantly poly(monovinyl aromatic hydrocarbon)" and "predominantly poly(conjugated diene)" , is meant that the starting main monomer can be mixed with minor amounts ( < 10 wt%) of structurally different monomers.

The monovinyl aromatic hydrocarbon may be selected from styrene and structurally related monomers having up to 20 carbon atoms, such as alpha-methyl styrene, p-methyl styrene, o-methyl styrene, p-tert.butyl styrene, dimethyl styrene and vinyl naphthalene. Styrene is the preferred monovinyl aromatic hydrocarbon atom.

The conjugated diene may be selected from butadiene and/or isoprene or structurally related monomers having up to 8 carbon atoms. The preferred conjugated dienes are butadiene, isoprene and the mixture of butadiene and isoprene.

Preferred block copolymer compositions according to the present invention comprise hereinbefore specified block copolymer components I, II + III and IV in weight ratios of from 8 to 13 wt%, from 75 to 85 wt%, and from 3 to 8 wt %. More preferably the block copolymer compositions have a weight average molecular weight in the range of from 450,000 to 600,000, while the poly(monovinyl aromatic hydrocarbon) content is in the range of from 28 to 32 wt%.

More preferred high molecular weight coupled block copolymer compositions comprise: (a) a linear diblock copolymer (I) represented by the general formula (A-B), having a peak apparent molecular weight of from 200,000 to 275,000, and wherein (II), (III) and (IV) have a peak apparent molecular weight of twice, three times, respectively more than three times this preferred range.

More preferred high molecular weight coupled block copolymer compositions of the present invention show a $M_w$ between 475,000 and 550,000 and a $M_z$ between 500,000 and 600,000 and show a rubber Tg of about -55°C.

Preferred block copolymer components in the hereinbefore specified compositions have poly(conjugated diene) blocks which have been selectively hydrogenated up to a degree of at least 80 %, more preferably up to a degree of at least 95 % of the initial ethylenic unsaturation.

Preferably, the ethylene content of the hydrogenated poly(conjugated diene) blocks (which is the result of the hydrogenation of the 1,4-addition) is in the range from 30 to 65%, preferably from 50 to 65 % by weight (based on the hydrogenated poly(conjugated diene) blocks).

The polymer blocks A have more preferably an true molecular weight in the range of from 30,000 to 70,000 and more preferably from 40,000 to 50,000.

In general, the polymers useful in this invention may be prepared by contacting the monomer or monomers with an organoalkali metal compound in a suitable solvent at a temperature within the range from -150°C to 300°C, preferably at a temperature within the range from 0°C to 100°C. Particularly effective polymerization initiators are organolithium compounds having the general formula

R Li

wherein R is an aliphatic, cycloaliphatic, alkyl-substituted cycloaliphatic, aromatic or alkyl-substituted aromatic hydrocarbon radical having from 1 to 20 carbon atoms of which sec.butyl is preferred.

Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane and heptane, cycloaliphatic hydrocarbons such as cyclopentane, cyclohexane and cycloheptane, alkyl-substituted cycloaliphatic hydrocarbons such as methylcyclohexane and methylcycloheptane, aromatic hydrocarbons such as benzene and the alkyl-substituted hydrocarbons such as toluene and xylene, and ethers such as tetrahydrofuran, diethylether and di-n-butyl ether. Preferred solvents are cyclopentane or cyclohexane.

The anionic polymerization of the conjugated diene hydrocarbons is typically controlled with structure modifiers such as diethyl ether or ethyl glyme (1,2-diethoxyethane), to obtain the desired amount of 1,2-addition. As described in Re 27,145 which is incorporated by reference herein, the level of 1,2-addition of a butadiene polymer or copolymer can greatly affect elastomeric properties after hydrogenation.

The block copolymer compositions of the present invention are prepared by a process, which comprises coupling of a living diblock copolymer that has initially been prepared by the anionic polymerization. The coupling agent to be used is a multifunctional, preferably a trifunctional and/or tetrafunctional coupling agent. By selection of the appropriate coupling agent and conditions the hereinbefore specified block copolymers $(A-B)4X$, $(A-B)_3X$, $(A-B)_2X$ and $(A-B)$ may be made in the herein specified weight ratio.

Said coupling reaction step was known in principle from e.g. US patents nos. 3,231,635; 3,251,905; 3,390,207; 3,598,887 and 4,219,627 and EP patent applications Nos. 413294; 387671; 636654 and WO 94/22931. On the other hand, no disclosure or suggestion has been made in said references that block copolymer compositions with the present advantages may be had.

The coupling agent may be selected from a variety of trifunctional agents and/or tetrafunctional agents such as tetra(alkoxy)silanes and /or alkyl tri(alkoxy)silanes wherein the alkoxy group contains from 1 to 6 carbon atoms. Similar coupling agents containing phenoxy groups or alkyl-substituted phenoxy groups may be used. Examples of such suitable coupling agents include for instance tetra(methoxy)silane, methyl tri(methoxy)silane, and the like. Also suitable are alkyl tri(halo)silanes and/or tetra(halo)silanes, such as methyl tri(chloro)silane; methyl tri(bromo)silane; tetra(chloro) silane, or tetra(bromo)silane. A further category of suitable coupling agents includes multifunctional coupling agents such as gamma-glycidoxypropyl trimethoxysilane. Preferred coupling agents to be used in the preparation of the compositions according to the present invention are non-halogen containing coupling agents. The preferred coupling agents are methyl tri(methoxy)silane and/or tetra(methoxy)silane.

According to the more preferred embodiment, using a silane based coupling agent, the ratio based on equivalents (wherein the coupling agent has a equivalent value of 3 or 4; and the living block copolymer has a equivalent value of 1) is in the range of from 2:1 to 1:1, preferably about 1.5:1. The temperature during coupling is preferably in the range of from 20 to 60°C.

Preferably the coupled block copolymer composition is contacted with an alcohol prior to hydrogenation and in particular with methanol, ethanol or 2-ethylhexanol, in a molar ratio of e.g. 2-ethylhexanol as preferred solvent to Li in the range of from 0.05 to 0.5 moles 2-ethylhexanol per mole of Li.

As indicated hereinbefore, the preferred block copolymer compositions comprise hydrogenated block copolymers. It will be appreciated that the hydrogenated B blocks, which can actually be regarded as poly(ethylene/butylenes) blocks (EB blocks) when the conjugated diene is butadiene, in the finally applied block copolymer composition preferably have been selectively hydrogenated to a degree of at least 95%, whereas the poly(styrene) blocks have not been hydrogenated or only in a degree of at most 5%.

The hydrogenation of these polymers may be carried out by a variety of well established processes including hydrogenation in the presence of such catalysts as Raney Nickel, noble metals such as platinum and palladium and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the present of a soluble hydrogenation catalyst. Such processes are disclosed in US Patent Nos. 3,113,986, 4,226,952 and Reissue 27,145, the disclosure of which are herein incorporated by reference. The polymers are hydrogenated in such a manner as to produce hydrogenated polymers having a residual unsaturation content in polydiene blocks of less than 5 percent by weight, preferably less than 1 %wt and more preferably as close to 0 percent as possible, of their original unsaturation content prior to hydrogenation. A titanium catalyst such as disclosed in US Patent 5,039,755, which is herein incorporated by reference, may also be used in the hydrogenation process.

The block copolymer compositions according to the present invention have been found to show a surprisingly low viscosity, enabling an advantageous large throughput in the block copolymer plant, in spite of the high molecular weights of said block copolymer compositions, when dissolved in industrial solvents such as toluene, cyclohexane and cyclopentane, or mixtures thereof.

It will be appreciated that this represents a very attractive advantage, which could certainly not be expected by persons skilled in this specific art on account of earlier teachings in JP-2000-103934.

The block copolymer compositions according to the present invention can be efficiently further compounded with extender oils and preferably mineral paraffinic oils or vegetable or animal oils, poly(olefins), poly(monovinyl aromatic) resins or mixtures thereof, or with hydrocarbon solvents such as kerosene, diesel oil, naphta and the like, to form strong diluted oil gels.

When the block copolymer compositions of the present invention are combined with oils and/or polyolefins and/or poly(monovinyl aromatic) resins, the final blends have been found to show surprisingly attractive physical properties such as oil resistance, compression set, high temperature resistance, tensile strength, hardness, low hysteresis, low stress relaxation at high temperatures and a low processing viscosity, in comparison to the high molecular weight prior art block copolymers.

It will be appreciated that elastomeric compositions, intended to be used for the manufacture of shaped articles and in particular those to be applied in automotive, sealing and building industry and more in particular in medical equipment, and comprising the block copolymer compositions of the present invention, poly(olefins), poly(monovinyl aromatic) resins, extender oils and the like, may in addition contain fillers and auxiliaries such as antioxidants, dyes etc.

The present invention is further illustrated by the following Examples, however without restricting its scope to these specific embodiments.

Examples

Materials description

HSBC Polymer descriptions

The expression "HSBC" is used for compositions of selectively hydrogenated block copolymers. All HSBC described in this section are compositions comprising block copolymers mostly constituted of external non hydrogenated polystyrene ("PS") blocks linked together via fully hydrogenated blocks of poly(conjugated diene). The compositions may comprise some minor amount of side materials in the form of pure PS (such side materials hereinafter collectively referred to as SPS).

The five HSBC utilized in the examples are listed in Table 1 below. They have been ordered by increasing apparent weight averaged molecular weight. All HSBC exhibit equivalent polystyrene content in the full grade (PSC) in the range 29-32%w and equivalent ethylene content in the rubber chains between 57%w and 63%w.

Table 1

| HSBC name | HSBC molecular weight | HSBC chemical composition | |
| | Weight average molecular weight (Mw) | PS content (PSC) | Ethylene content in rubber segment |
| | kg/mol | %w | %w of rubber |
| HSBC1 | 270 | 32 | 60 |
| HSBC2 | 400 | 30 | 58 |
| HSBC3 | 435 | 30 | 62 |
| HSBC4 | 490 | 30 | 62 |
| HSBC5 | 490 | 30 | 62 |

HSBC1 is a commercial product, sold by Kraton Polymers as Kraton® G1651. HSBC2 is an experimental product comprising linear hydrogenated block copolymers. HSBC3 and HSBC5 are commercial products, sold by Kuraray as Septon™ 4077 and 4099 and comprising linear hydrogenated block copolymers. These compositions are used for comparative purposes.

For consistency reasons, the HSBC4 was produced twice (HSBC4a and HSBC4b). These compositions were prepared using methyltrimethoxysilane as coupling agent. The compositions were near identical, as is indicated in Tables 2 and 3. These compositions are hereinafter jointly referred to as HSBC4. In Table 4 an overview of all grades is presented.

Table 2, HSBC4 a

|  | peak Molecular weight | polymeric fractions |  |
|---|---|---|---|
|  | g/mol | %w | Full grade $M_n$, $M_w$, $M_z$: |
| SPS* | 150000 | 4 | $M_n$ = 360807 g/mol |
| Linear diblock | 242100 | 9 | $M_w$ = 496112 g/mol |
| linear di-arm molecules | 471700 | 63 | $M_z$ = 555204 g/mol |
| three arms molecules | 673400 | 19 |  |
| More than 3arms molecules | 945200 | 5 |  |
| * includes PS with peak molecular weight of 45,060 g/mol | | | |

Table 3, HSBC4 b

|  | peak Molecular weight | polymeric fractions |  |
|---|---|---|---|
|  | g/mol | %w | Full grade $M_n$, $M_w$, $M_z$: |
| SPS* | 152300 | 5 | Mn = 323650 g/mol |
| Linear diblock | 246300 | 11 | Mw = 484542 g/mol |
| linear di-arm molecules | 488300 | 63 | $M_z$ = 543666 g/mol |
| three arms molecules | 685400 | 17 |  |
| More than three arms molecules | 917300 | 3 |  |
| * includes PS with peak molecular weight of 45,090 g/mol | | | |

Table 4

| HSBC | PS block/content | | LHPSEC values (PS standard) | | | | |
|---|---|---|---|---|---|---|---|
|  | PS blocks MW kg/mol | PSC % | $M_w$ | $M_z$ | Main peak Mm | 2nd main peak (if above 10%w) | polymer fraction above 400kg/mool |
|  | kg/mol | %w | kg/mol | kg/mol | kg/mol | kg/mol | %w |
| HSBC 1 | 28 | 32 | 270 | 280 | 270 | / | <10 |
| HSBC 2 | 44 | 30 | 400 | 427 | 444 | / | > 40 |
| HSBC 3 | 43 | 30 | 435 | 443 | 436 | / | > 85 |
| HSBC 4 | 45 | 30 | 490 | 550 | 480 | 680 | > 70 |
| HSBC 5 | 48 | 30 | 490 | 542 | 563 | / | around 87 |

The other materials used in the examples are listed in Table 5.
Table 5

| Oil-1 | White mineral paraffinic oil : Primol™ 352 from ExxonMobil |
|---|---|
| Oil-2 | Mineral paraffinic oil : PW90 from Idemitsu |

(continued)

| | |
|---|---|
| PP-1 | Homo polypropylene PM6100 from Montell; MFR(230°C/2.16kg)=5.5g/600s ; Vicat Softening T(9.8N) =153°C |
| PP-2 | Homo polypropylene HP501 L from Basell; MFR(230°C/2.16kg)=6g/600s; Vicat Softening T(9.8N) =154°C |
| PP-3 | Homo polypropolene Allomer PM600A; MFR(230°C/2.16kg)=7.5g/600s |
| PP-4 | Homo polypropylene Moplen™ HP648S from Basell; MFR(230°C/2.16kg)=35g/600s; Vicat Softening T (9.8N)=154°C |
| PP-5 | Homo polypropylene Adstif™ HA722J from Basell; MFR(230°C/2.16kg)=3.5g/600s; Vicat Softening T (9.8N)=159°C |
| TPE-E -1 | Copolyester TPE Hytrel™ 4056 from DuPont; MFR(190°C/2.16kg)=5.3g/600s; Vicat Softening T(9.8N) =108°C; Melting point=150°C |
| PE-1 | Rigidex™ HD5226EA from BP Solvay, MFR(190°C/2.16kg)=26g/600s; Vicat Softening T(9.8N)=123°C |
| Ionom er | Surlyn™ PC100 from DuPont; MFR(190°C/2.16kg)=0.9g/600s; Melting point=88°C |
| Filler-1 | Durcal™ 5 from Omya |
| Filler-2 | CaCO3 0.3 micron average particle size from Nitto Funka |
| DCP | organic peroxide : dicumylperoxide Luperox™ F from Arkema |
| TAC | co-curing agent: 2,4,6 triallyloxy-1,3,5-triazine from Aldrich |
| Resin-1 | Epon™ 1004 from Hexion |
| AO-1 | Irganox™ 1010 from Ciba (phenolic antioxidant) |
| AO-2 | Irgafos™ 168 from Ciba (secondary antioxidant) |
| AO-3 | Irganox 1076 from Ciba (phenolic antioxidant) |
| AO-4 | Irganox PS800 from Ciba (secondary antioxidant) |

Example 1, Easier HSBC production: lower solution viscosity than other high Mw HSBC.
As indicated in Table 6, very surprisingly, it is the highest Mw HSBC4 that exhibits the lowest solution viscosity between the high Mw HSBC, exhibiting Mw above 400 kg/mol. This is a significant advantage during the production of such HSBC since both the polymerisation and the hydrogenation steps are performed in solvents.
Table 6

| HSBC | Mw | Viscosity in solvent | |
|---|---|---|---|
| | HSBC weight average Mw | Sol visc 25°C; 5%w in toluene | Sol visc 30°C; 5%w in toluene |
| | kg/mol | mPa.s | mPa.s |
| HSBC 1 | 270 | 50 | n.m. |
| HSBC 3 | 430 | 550 | 420 |
| HSBC 4 | 490 | 475 | 385 |
| HSBC 5 | 490 | 930 | 700 |

Example 2, application as oil gel
High Mw HSBC are used to prepare gels with various types of liquid hydrocarbons like for instance paraffinic oils. Those 'HSBC gels' must exhibit a balance of properties high fluidity at 200°C, a gel appearance at room temperature as well as at higher temperature (the drop point measures the temperature above which the gel starts to become liquid) . To be commercially effective solution, those gels must be easy to mix and must contain the minimum amount of HSBC. The gel must also retain as much as possible to oil thus without significant oil exudation.
In this example, three different 'oil gels' were produced by adding in hot Oil-1 (180°C) 4%w of three different HSBC (HSBC 1, HSBC 2, HSBC4). Those systems were then further mixed and homogenized during 2 hours with in low shear mixer at 180°C. As indicated in Table 7, HSBC according to the present invention gave significantly improved mechanical performances, especially at higher temperatures when combined with liquid hydrocarbons.

Table 7

| | Oil gel: 4%w HSBC in oil | | |
|---|---|---|---|
| HSBC | low shear mixing at 180°C | Drop point 5°C/min (°C) | Oil bleed out on paper |
| | homogeneity | °C | Visual level |
| HSBC 1 | +++ | 154 | medium |
| HSBC 2 | - | 183 | low |
| HSBC 4 | + | 185 | low |

The HSBC1 with the lowest Mw is the easiest to mix but fails to reach the required high temperature performance since it starts to flow at 154°C. In addition, this HSBC1 gives an 'oil gel' that bleeds significantly when in contact with paper. Both high Mw HSBC2 and HSBC4 reach high temperature performance (drop point =183-185°C) but the HSBC4 presents a far better homogeneity (assessed by visual inspection) when mixed at 180°C.

Example 3, application in compounds

As is shown hereafter and in Table 9, HSBC according to the present invention gave also significantly improved mechanical performances, especially at higher temperatures when combined with liquid hydrocarbons and other polymeric materials.

The five HSBC are here compared in mixture containing in addition to 100parts of HSBC, 150 parts of oil, 40 parts of homo-polypropylene, 60 parts of calcium carbonate filler and minor amounts of additives. The presented data come from three different compounding sessions including each time equivalent but not identical materials. The following Table 8 gives more details on the exact ingredients used in each compounding session:

Table 8

| Compounding session | Oil | Homo poly-propylene | CaCO3 filler | Additives |
|---|---|---|---|---|
| A | Oil-2 | PP-3 | Filler-2 | 0.6p Resin-1 +0.2p AO-1 +0.2p AO-2 |
| B | Oil-1 | PP-2 | Filler-1 | 0.6p Resin-1 +0.2p AO-1 +0.2p AO-4 |
| C | Oil-1 | PP-2 | Filler-1 | 0.6p Resin-1 +0.2p AO-1 +0.2p AO-4 |

Measured properties of the compounds are presented in Table 9.

Table 9

| Compound: 100 parts HSBC; 150 parts oil; 40 parts PP; 60 parts $CaCO_3$ additives | | | | | | | | | | | | |
|---|---|---|---|---|---|---|---|---|---|---|---|---|
| HSBC | Hardness (3s) | | | Compression Set (72h at 70°C) | | | Compression Set (24h at 100°C) | | | Tensile Strength (MD& PMD average) | | |
| | Shore A | | | % | | | % | | | MPa | | |
| | A | B | C | A | B | C | A | B | C | A | B | C |
| HSBC 1 | | 51 | | | 41 | | | 62 | | | 7,6 | |
| HSBC 2 | 55 | 51 | 54 | 38 | 38 | 35 | 46 | 50 | 46 | 6,9 | 7,7 | 8,6 |
| HSBC 3 | | 51 | | | 40 | | | 53 | | | 8,2 | |
| HSBC 4 | | | 54 | | | 37 | | | 46 | | | 9,4 |

(continued)

| Compound: 100 parts HSBC; 150 parts oil; 40 parts PP; 60 parts CaCO$_3$ additives | | | | | | | | | | | | |
|---|---|---|---|---|---|---|---|---|---|---|---|---|
| HSBC | Hardness (3s) | | | Compression Set (72h at 70°C) | | | Compression Set (24h at 100°C) | | | Tensile Strength (MD& PMD average) | | |
| | Shore A | | | % | | | % | | | MPa | | |
| | A | B | C | A | B | C | A | B | C | A | B | C |
| HSBC 5 | 55 | | | 40 | | | 45 | | | 7,6 | | |

Some small variations are observed in most measured performances due to the different ingredients source and different twin screw extruder and injection machines used to produce the compound and the measured samples. Hardness values for instance range from 51 to 55 for the same ratio of similar type of ingredients. Despite this, we can clearly identify that HSBC1 is significantly inferior in temperature performance compare to the other HSBC. We can also identify that HSBC4 is superior to HSBC3 in Compression Set (24h at 100°C). The Tensile Strength at break calculated as the average of the Tensile Strengths measured in mould direction and perpendicular to mould direction on 2mm injected pieces clearly shows that HSBC4 gives the highest tensile strength of all HSBC based compounds.

Example 4, application in compounds, with and without dynamic vulcanization

In this example it is shown that HSBC according to the present invention give also significantly improved mechanical performances, especially at higher T when combined with liquid hydrocarbons and other polymeric polyolefinic materials with and without dynamic vulcanization.

The following example demonstrates the excellent elasticity at high temperature measured on HSBC4 based compounds as well as the better solvent resistance of the HSBC4 compound compared to the HSBC2 based compound. The HSBC4 based compound reaches without an additional cumbersome dynamical curing step the temperature performance measured on equivalent compound after the complex dynamical curing operation. It must be appreciated that the use of complex dynamical curing technology presents many negative side effects (like for instance odour generation, colour bodies generation, decrease of the compound processability, introduction of product inconsistency due to the difficulty to precisely control simultaneously the curing chemistry together with the high shear mixing).

HSBC-4 is compared to HSBC-2 in a non-cured formulation (100 parts HSBC + 100 parts Oil-1+ 50 parts PP-2 + 0.4 part AO-3 + 0.4 part AO-2) and in a dynamically vulcanised compound (100parts HSBC + 100parts Oil-1 + 50parts PP-2 + 0.4part AO-3 + 0.4part AO-2 + 5parts TAC + 10parts DCP peroxide). See table 10:

Table 10

| Base Compound : 100part HSBC + 100part Oil + 50part PP + additives | | | | | |
|---|---|---|---|---|---|
| non cured/cured | | non cured formulation | | dynamically vulcanized compound | |
| HSBC | | HSBC4 | HSBC2 | HSBC2 | HSBC4 |
| Extracted HSBC | %w | 12,5 | 35 | 0* | 0* |
| Hardness (3sec) | Shore A | 69 | 68 | 67 | 66 |
| CS (100°C, 24h) | % | 46 | 55 | 47 | 45 |
| * Dynamically vulcanized compounds if properly cured exhibit good solvent resistance | | | | | |

In the non cured compounds, the compound based on HSBC4 presents a better elastic recovery at 100°C (measured here via a lower Compression Set measurement). In addition, the non cured HSBC4 based compounds clearly outperform the HSBC2 compound as far as the HSBC extracted in toluene.

Considering the dynamically vulcanised systems, we see that the curing step has not improved the temperature performance since both cured compounds reached CS data identical to data measured on the non cured HSBC4 compound. The only observed advantage of the cumbersome dynamical chemical curing technology appears to be the improved resistance to toluene extraction.

Example 5, application in compounds

As is shown in Table 11 hereinafter, HSBC according to the present invention gave even further significantly improved mechanical performances and oil resistance, especially at higher temperatures when combined with liquid hydrocarbons, propylene based polymers together with other polymeric materials.
Table 11

| HSBC | | 100 parts HSBC1 | 100 parts HSBC4 | 100 parts HSBC4 | | |
|---|---|---|---|---|---|---|
| Oil-1 | | 150 parts | 150 parts | 150 parts | | |
| PP | | 40 parts PP-2 | 40 parts PP-2 | 20 parts PP-5 | | |
| other plastics | | / | / | 20 parts PE-1 | 25 parts Ionomer | 25 parts TPE-E-1 |
| Filler-1 | | 60 parts | 60 parts | / | | |
| additives | | 0.2 part AO-1 + 0.2 part AO-4 | | | | |
| Hardness 0s | Shore A | 56 | 59 | 47 | 50 | 42 |
| CS 72h 70°C | % | 41 | 37 | 28 | 43 | 31 |
| CS 24h 100°C | % | 62 | 46 | 35 | 36 | 39 |
| CS 24h 125°C | % | 75 | 59 | 36 | 43 | 52 |
| CS 24h 150°C | % | n.m. | 82 | 58 | 67 | 75 |
| Modulus 100% average | MPa | 1.45 | 1.70 | 1.25 | 1.50 | 1.10 |
| Modulus 300% average | MPa | 2.17 | 2.50 | 1.90 | 2.20 | 1.80 |
| Tensile Strength average | MPa | 7.70 | 9.20 | 5.60 | 4.60 | 5.10 |
| Elongation at break, % average | % | 912 | 850 | 690 | 730 | 710 |
| Weight increase after 24h at 70°C ASTM oil#2 | % | n.m. | 20 | 25 | 25 | 30 |
| T.S. retention after 24h at 70°C ASTM oil#2 | % | n.m. | 76 | 87 | 100 | 87 |

The above example demonstrates the excellent compound performance achieved when combining the HSBC4 with polypropylene and other plastics. Once again the HSBC1 is clearly inferior especially in CS above 70°C. The relatively low weight increase and effective tensile strength retention after 24h immersion in ASTM #2 oil at 70°C are other very attractive new features measured on HSBC4 based compounds.
Example 6, evaluation of processing performance
In this example, and as set out in Table 12, the processing performance of several compounds was evaluated on the basis of the Melt Flow Rate; the ease for the compound to flow under a low pressure at typical processing temperatures.
Table 12

| | comp1 | comp2 | comp3 | comp4 |
|---|---|---|---|---|
| HSBC | 100 parts | 100 parts | 100 parts | 100 parts |
| Oil | 200 parts Oil-1 | 150 parts Oil-2 | 150 parts Oil-1 | 150 parts Oil-1 |
| Plastic | 80 parts PP-4 | 40 parts PP-3 | 40 parts PP-2 | 40 parts PP-2 |
| Filler | / | 60 parts Filler-2 | 60 parts Filler-1 | 60 parts Filler-1 |
| additives | 0.2 parts AO-1+0.2 parts AO-4 | 0.6 parts Resin-1+0.2 parts AO-1 + 0.2 parts AO-2 | 0.6 parts Resin-1 + 0.2 parts AO-1+0.2 parts AO-4 | |

We found higher MFR and thus higher fluidity for HSBC4 based compound compared to HSBC5 that has a similar Mw since 80%-100% is clearly higher than 63%.

Despite its higher Mw, HSBC4 exhibits equivalent MFR in compound versus HSBC2 & HSBC3 since 80%-100% not really different from 100% and 105%.

The lowest Mw HSBC1 gives clearly higher flow since 125%-310% is higher than 80%-100%. The relative performance is set out in Table 13.

Table 13

| HSBC compound flow | | | | | | |
|---|---|---|---|---|---|---|
| compound formulation | | | comp1 | comp2 | comp3 | comp4 |
| MFR test conditions | | | 180°C; 2.16kg | 230°C; 5kg | 200°C; 5kg | 230°C; 5kg |
| MFR( HSBC 2) | g/600s | | 23 | 55 | 17 | 21 |
| MFR( HSBC 2) /MFR( HSBC 2) | % | | 100 | 100 | 100 | 100 |
| MFR( HSBC 1) /MFR( HSBC 2) | % | | 310 | | 125 | |
| MFR( HSBC 3) /MFR( HSBC 2) | % | | | | 105 | |
| MFR( HSBC 4) /MFR( HSBC 2) | % | | 100 | | | 80 |
| MFR( HSBC 5) /MFR( HSBC 2) | % | | | 63 | | |

## Claims

1. High molecular weight coupled block copolymer composition comprising (a) a linear diblock copolymer (I) represented by the general formula (A-B), having a peak apparent molecular weight of from 150,000 to 300,000,(b) a linear di-armed block copolymer (II), represented by the general formula $(A-B)_2$ X,(c) a tri-armed block copolymer (III), represented by the formula $(A-B)_3$X,(d) a more than tri-armed block copolymer (IV), represented by the formula $(A-B)_{n>3}$X,(e) side polymeric structures (SPS) having a peak apparent molecular weight below the linear diblock copolymer (I),wherein A represents a block of predominantly poly(monovinyl aromatic hydrocarbon) and wherein the poly(monovinyl aromatic hydrocarbon) content is in the range of from 20 to 35 wt%; wherein B represents a block of predominantly poly(conjugated diene); wherein X is the residue of a trifunctional and /or tetrafunctional coupling agent; wherein the block copolymer composition has a weigh average molecular weight Mw in the range of from 450,000 to 800,000, and wherein the relative amounts of block copolymers corresponds to: I is from 5 to 15 wt%; II and III together are from 70 to 90 wt%, wherein III is above 10 wt%; IV is below 10 wt% and SPS is less than 10 wt% respectively, relative to the weight of the total block copolymer composition, in which the respective components add up to 100 %.

2. High molecular weight coupled block copolymer compositions according to claim 1, comprising components I, II + III and IV in weight ratios of from 8 to 13 wt%, from 75 to 85 wt%, and from 3 to 8 wt %.

3. High molecular weight coupled block copolymer compositions according to claim 1 or 2, having a weight average molecular weight in the range of from 450,000 to 600,000, while the poly(monovinyl aromatic hydrocarbon) content is in the range of from 28 to 32 wt%.

4. High molecular weight coupled block copolymer compositions according to the claims 1-3, which comprise: (a) a linear diblock copolymer (I) represented by the general formula (A-B), having a peak apparent molecular weight of from 200,000 to 275,000, and wherein (II), (III) and (IV) have a peak apparent molecular weight of twice, three times, respectively more than three times this preferred range.

5. High molecular weight coupled block copolymer compositions according to the claims 1-4 wherein the monovinyl aromatic hydrocarbon is pure styrene and the conjugated diene is butadiene, isoprene or mixtures thereof.

6. High molecular weight coupled block copolymer compositions according to the claims 1-5 wherein the poly(conjugated diene) blocks have been hydrogenated up to a degree of at least 80 % and more preferably up to a degree of at least 95 % of the initial ethylenic unsaturation.

7. High molecular weight coupled block copolymer compositions according to the claim 6 wherein the ethylene content of the hydrogenated poly(conjugated diene) blocks is in the range from 50 to 65 % by weight (based on the poly (conjugated diene) blocks).

8. High molecular weight coupled block copolymer compositions according to the claims 1-7 wherein the polymer blocks A have a true molecular weight in the range of from 30,000 to 70,000 and preferably from 40,000 to 50,000.

9. Process for the manufacture of the high molecular weight coupled block copolymer compositions according to the claims 1-8, comprising the preparation of a linear diblock copolymer (I) having a peak apparent molecular weight of from 150,000 to 300,000 and coupling the living diblock copolymer with a tetrafunctional and/or trifunctional silane coupling agent.

10. Process according to claim 9, wherein a coupling agent is used in an equivalent ratio of Si:Li (representing the active end in the initial block copolymer to be coupled) in the range of from 2:1 to 1:1.

11. Process according to claim 9-10 wherein the applied coupling agent is methyl tri(methoxy)silane.

12. Shaped articles and gels derived from the high molecular weight coupled block copolymer compositions according to the claims 1-8, mixed with extender oils, poly(olefins), poly(monovinyl aromatic) resins, hydrocarbon solvents, or mixtures thereof.

13. Shaped articles and gels according to claim 12 wherein the block copolymers compositions according to claims 1-8 have been mixed with oils and/or poly(olefins) and/or poly(monovinyl aromatic) resins.

European Patent
Office

**EUROPEAN SEARCH REPORT**

Application Number

EP 06 11 2872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/154144 A1 (ATWOOD HARVEY E ET AL) 14 July 2005 (2005-07-14) * paragraphs [0003], [0010], [0014], [0027], [0028], [0043], [0049]; claims * | 1,9 | INV. C08F297/04 C08L53/02 |
| A | EP 1 103 577 A (ZEON CORPORATION) 30 May 2001 (2001-05-30) * paragraph [0051]; claim 1; examples * | 1-13 | |
| X | US 2003/225210 A1 (HANDLIN DALE LEE ET AL) 4 December 2003 (2003-12-04) * claims * | 12 | |

TECHNICAL FIELDS
SEARCHED    (IPC)

C08F
C08L

The present search report has been drawn up for all claims

| Place of search | Date of completion of the search | Examiner |
|---|---|---|
| Munich | 7 June 2006 | Wirth, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 11 2872

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2006

| Patent document cited in search report | | Publication date | Patent family member(s) | | Publication date |
|---|---|---|---|---|---|
| US 2005154144 | A1 | 14-07-2005 | US 2003225209 A1<br>US 2003232928 A1 | | 04-12-2003<br>18-12-2003 |
| EP 1103577 | A | 30-05-2001 | WO 9958605 A1<br>JP 2003342441 A<br>US 6534593 B1 | | 18-11-1999<br>03-12-2003<br>18-03-2003 |
| US 2003225210 | A1 | 04-12-2003 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000103934 A
- US 3231635 A
- US 3251905 A
- US 3390207 A
- US 3598887 A
- US 4219627 A
- EP 413294 A
- EP 387671 A
- EP 636654 A
- WO 9422931 A
- US 3113986 A
- US 4226952 A
- US 27145 A
- US 5039755 A